# EUROPEAN PATENT APPLICATION

(11) **EP 4 514 058 A1**
(43) Date of publication of application: **26.02.2025**
(21) Application number: 23839746.7
(22) Date of filing: 28.03.2023
(51) Int. Cl.: H04W 76/50, H04W 4/90, H04W 8/02, H04W 48/16, H04L 65/1016

(54) **ELECTRONIC DEVICE FOR SUPPORTING EMERGENCY CALLS, AND METHOD FOR OPERATING SAME**

(30) Priority: 13.07.2022 KR 20220086533; 03.08.2022 KR 20220096817
(71) Applicant: Samsung Electronics Co., Ltd., Suwon-si, Gyeonggi-do 16677 (KR)
(72) Inventor: KIM, Sohmann, Suwon-si, Gyeonggi-do 16677 (KR); KANG, Heedeok, Suwon-si, Gyeonggi-do 16677 (KR); KIM, Soohong, Suwon-si, Gyeonggi-do 16677 (KR); MOON, Daewon, Suwon-si, Gyeonggi-do 16677 (KR); KIM, Dongho, Suwon-si, Gyeonggi-do 16677 (KR)
(74) Representative: Gulde & Partner
(86) International application number: PCT/KR2023/004124
(87) International publication number: WO 2024/014652

(57) **Abstract**

Various embodiments of the present invention relate to a device and method for supporting emergency calls in an electronic device. According to various embodiments, the electronic device comprises: a memory; a communication circuit; and a processor. The processor can: detect the movement of the electronic device into a service area supporting an emergency call based on LTE communication; confirm whether an emergency call profile of the LTE communication corresponding to a home network of the electronic device exists; on the basis of determining that the emergency call profile of the LTE communication does not exist, confirm whether the network supports CS communication; on the basis of determining that the network does not support CS communication, obtain the emergency call profile of the LTE communication corresponding to the network to which the electronic device is connected; and provide the emergency call based on the LTE communication on the basis of the emergency call profile of the LTE communication. Various other embodiments may also be possible.

## Description

### [Technical Field]

An embodiment of the disclosure relates to an electronic device for supporting emergency calls, and a method for operating the same.

### [Background Art]

With development of information communication technology and semiconductor technology, an electronic device may provide various functions. For example, the various functions may include at least one of a call function, a message function, a broadcasting function, a wireless Internet function, a camera function, an electronic payment function, a user authentication function, or a music reproduction function.

When a disaster situation such as a natural disaster and/or an emergency situation such as fire or a car accident occurs, the electronic device can provide an emergency call for an emergency aid of a user of the electronic device or situation notice.

### [Disclosure of Invention]

### [Solution to Problem]

An emergency call function may include a CS emergency call type supporting an emergency call based on a circuit switch (CS) network and a voice over LTE (VoLTE) emergency call type supporting an emergency call based on a long-term evolution (LTE) network.

When an electronic device registers in a home network of a communication operator supporting a CS emergency call type only, the CS emergency call type may be provided in the home network of the communication operator. When the electronic device is moved to a service area (e.g., country) not supporting CS communication (e.g., in a case of roaming), CS communication is not supported in a network (e.g., a roaming network) to which the electronic device is connected, and thus the use of the emergency call function may be restricted. For example, in order to provide a VoLTE emergency call type, the electronic device needs an emergency Internet protocol (IP) multimedia subsystem (IMS) profile negotiated with a communication operator supporting the VoLTE emergency call function. The electronic device registered in the communication operator supporting the CS emergency call type only does not have the emergency call IMS profile for the VoLTE emergency all type, and thus the use of the VoLTE emergency call type may be restricted.

An embodiment of the disclosure provides an apparatus and a method for providing an emergency call function (e.g., the VoLTE emergency call type) based on LTE communication in a network not supporting CS communication.

According to various embodiments, an electronic device may include a memory, a communication circuit, and at least one processor operatively connected to the memory and the communication circuit. According to an embodiment, the processor may detect, based on information related to a network to which the electronic device is connected, movement to a service area supporting an emergency call based on long-term evolution (LTE) communication. According to an embodiment, the processor may identify, based on the detection of the movement to the service area, whether an emergency call profile of the LTE communication, which corresponds to a home network of the electronic device, exists. According to an embodiment, when determining that the emergency call profile of the LTE communication, which corresponds to the home network of the electronic device, does not exist, the processor may identify, based on connection information to the network to which the electronic device is connected, whether the network supports circuit switching (CS) communication. According to an embodiment, the processor may acquire, based on the determination that the network does not support CS communication, the emergency call profile of the LTE communication, which corresponds to the network to which the electronic device is connected. According to an embodiment, the processor may provide, based on the emergency call profile of the LTE communication, which corresponds to the network, the emergency call based on the LTE communication.

According to various embodiments, a method for operating an electronic device may include detecting, based on information related to a network to which the electronic device is connected, movement of the electronic device to a service area supporting an emergency call based on long-term evolution (LTE) communication. According to an embodiment, the electronic device may identify, based on the detection of the movement to the service area, whether an emergency call profile of the LTE communication, which corresponds to a home network of the electronic device, exists. According to an embodiment, when determining that the emergency call profile of the LTE communication, which corresponds to the home network of the electronic device, does not exist, the electronic device may identify, based on connection information to the network to which the electronic device is connected, whether the network supports circuit switching (CS) communication. According to an embodiment, the electronic device may acquire, based on the determination that the network does not support CS communication, the emergency call profile of the LTE communication, which corresponds to the network to which the electronic device is connected. According to an embodiment, the electronic device may provide, based on the emergency call profile of the LTE communication, which corresponds to the network, the emergency call based on the LTE communication.

According to an embodiment of the disclosure, when an electronic device moves to (e.g., roaming) a service area (e.g., country) not supporting circuit switch (CS) communication but supporting a voice over LTE (VoLTE) emergency call type, the electronic device can provide an emergency call function based on the VoLTE emergency call type in a network not supporting CS communication by acquiring an emergency call profile (e.g., an emergency call IMS profile) for the VoLTE emergency call type, which corresponds to the network to which the electronic device is connected.

### [Brief Description of Drawings]

FIG. 1 is a block diagram illustrating an electronic device in a network environment according to various embodiments.
FIG. 2 is a block diagram illustrating an electronic device for providing an emergency call function according to various embodiments.
FIG. 3 is a block diagram illustrating a program for providing an emergency call function according to various embodiments.
FIG. 4 is a flow chart for providing an emergency call function in an electronic device according to various embodiments.
FIG. 5 is a flow chart for origination of an emergency call in an electronic device according to various embodiments.

### [Mode for the Invention]

Hereinafter, various embodiments are described in detail with reference to accompanying drawings.

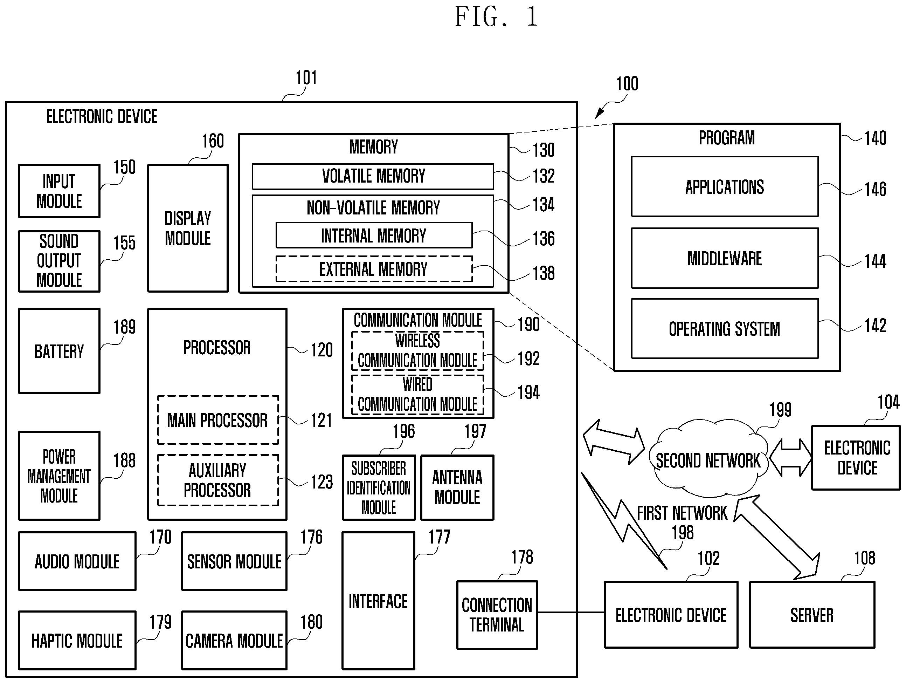

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

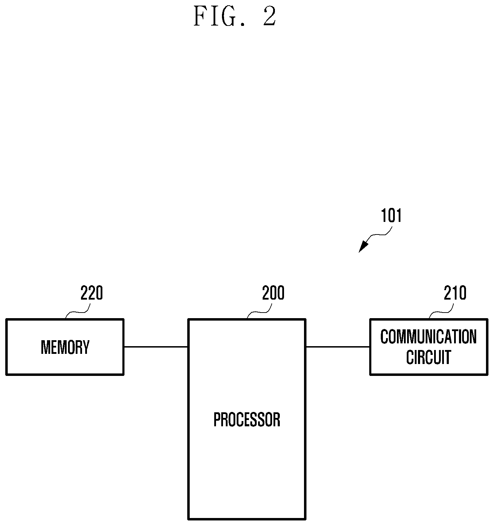

FIG. 2 is a block diagram illustrating an electronic device for providing an emergency call function according to various embodiments.

According to various embodiments referring to FIG. 2, an electronic device 101 may include a processor 200, a communication circuit 210 (or communication circuitry), and/or a memory 220. According to an embodiment, the processor 200 may substantially identical to the processor 120 of FIG. 1, and may be included in the processor 120. The communication circuit 210 may be substantially identical to the wireless communication module 192 of FIG. 1, and may included in the wireless communication module 192. The memory 220 may be substantially identical to the memory 130 of FIG. 1, and may be included in the memory 130. According to an embodiment, the processor 200 may be operatively, functionally, and/or electrically connected to the communication circuit 210 and/or the memory 220.

According to various embodiments, the processor 200 may identify whether a service area (e.g., country) in which the electronic device 101 is located is changed. According to an embodiment, the processor 200 may acquire (or obtain) a mobile country code (MCC) and/or a mobile network code (MNC) of a network to which the electronic device is connected. According to an embodiment, the processor 200 may compare the MCC of the network to which the electronic device 101 is connected with an MCC included in a PLMN list of an equivalent home public mobile network (EHPLMN) or an MCC of international mobile subscriber identity (IMSI). The processor 200 may compare the MNC of the network to which the electronic device 101 is connected with an MNC included in the PLMN list of the EHPLMN or an MNC of the IMSI. According to an embodiment, when the MCC of the network to which the electronic device 101 is connected is matched to the MCC included in the PLMN list of the EHPLMN or the MCC of the IMSI and the MNC of the network to which the electronic device 101 is matched to the MNC included in the PLMN list of the EHPLMN or the MNC of the IMSI, the processor 200 may determine that the electronic device 101 is connected to the network of a home PLMN (HPLMN). According to an embodiment, when the MCC of the network to which the electronic device 101 is connected is not matched to the MCC included in the PLMN list of the EHPLMN or the MCC of the IMSI or the MNC of the network to which the electronic device 101 is connected is not matched to the MNC included in the PLMN list of the EHPLMN or the MNC of the IMSI, the processor 200 may determine that the service area (e.g., country) of the electronic device 101 is changed. For example, the service area (e.g., country) may include at least one cellular network operated by the same communication operator. For example, the change of the service area (e.g., country) may be referred to as roaming.

According to various embodiments, when the processor 200 determines that the service area (e.g., country) of the electronic device 101 is changed, the processor 200 may identify an emergency call type of the network to which the electronic device 101 is connected. According to an embodiment, the processor 200 may identify whether the network to which the electronic device 101 is connected supports a VoLTE emergency call type from a control message received from the network to which the electronic device 101 is connected. For example, the processor 200 may identify, based on a value of an "ims-EmergencySupport-r9" field of system information block type 1 (SIB1) received from the network to which the electronic device 101 is connected, whether the network to which the electronic device 101 is connected supports a VoLTE emergency call type. For example, when the value of the "ims-EmergencySupport-r9" field of SIB 1 is configured to be "true", the processor 200 may determine that the network to which the electronic device 101 is connected supports the VoLTE emergency call type. For example, when the value of the "ims-EmergencySupport-r9" field of SIB1 is configured to be "false" or the "ims-EmergencySupport-r9" is not configured, the processor 200 may determine that the network to which the electronic device 101 is connected does not support the VoLTE emergency call type. For example, the processor 200 may identify, based on a value of an "EMC BS" field of "EPS network feature support" of a TAU-related message (e.g., tracking area update accept) or a connection acceptance-related message (e.g., attach accept) received from the network to which the electronic device 101 is connected, whether the network to which the electronic device 101 is connected supports the VoLTE emergency call type. For example, when the value of the "EMC BS" field is configured to be "1", the processor 200 may determine that the network to which the electronic device 101 is connected supports the VoLTE emergency call type. For example, when the value of the "EMC BS" field is configured to be "0", the processor 200 may determine that the network to which the electronic device 101 is connected does not support the VoLTE emergency call type. For example, the VoLTE emergency call type may include a type of supporting an emergency call through a long term evolution (LTE) network.

According to various embodiments, when the network to which the electronic device 101 is connected based on the change of the service area supports the VoLTE emergency call type, the processor 200 may identify whether an emergency call profile (e.g., an emergency call IMS profile) of the VoLTE emergency type corresponding to a home network (e.g., HPLMN) of the electronic device 101 exists. According to an embodiment, the processor 200 may identify an MCC and an MNC of a subscriber identity module (SIM) (not shown) of the electronic device 101. The processor 200 may identify whether an emergency call profile corresponding to the MCC and the MNC of the SIM of the electronic device 101 exists from the VoLTE emergency call type-related emergency call profile information stored in the memory 220. For example, the emergency call profile information related to the VoLTE emergency call type may include a database of emergency call profiles negotiated to support the emergency call through an LTE network.

According to various embodiments, when there is no VoLTE emergency call-type emergency call profile (e.g., emergency call IMS profile) corresponding to the home network of the electronic device 101, the processor 200 may identify whether the network to which the electronic device 101 is connected supports circuit switch (CS) communication. According to an embodiment, when an evolved packet system (EPS) connection type (e.g., EPS attach type) of the electronic device 101 is "EPS attach", the processor 200 may determine that the network to which the electronic device 101 is connected does not support CS communication. For example, the EPS connection type may be identified based on a value of a field of an "EPS attach result" information element (IE) of a connection acceptance-related or a TAU acceptance-related message received from the network to which the electronic device 101 is connected. According to an embodiment, when the EPS connection type (e.g., EPS attach type) of the electronic device 101 is "combined EPS/IMSI attach" and an additional update type (e.g., additional update type) is "SMS only", the processor 200 may determine that the network to which the electronic device 101 is connected does not support CS communication. For example, the additional update type may be identified based on a value of a field of an "additional update type" information element (IE) of a connection acceptance-related or a TAU acceptance-related message received from the network to which the electronic device 101 is connected. According to an embodiment, when the service area (e.g., country) in which the electronic device 101 is located is included in a list of server areas (e.g., a list of countries) in which CS communication is not supported, the processor 200 may determine that the network to which the electronic device 101 is connected does not support CS communication.

According to an embodiment, when determining that the network to which the electronic device 101 is connected supports CS communication, the processor 200 may control the communication circuit 210 to provide a CS emergency call type. For example, the CS emergency call type may include a type of supporting an emergency call through a circuit switch (CS) network. For example, the CS network may include a 2G or 3G communication-type network.

According to various embodiments, when determining that the network to which the electronic device 101 is connected does not support CS communication, the processor 200 may acquire a VoLTE emergency call-type emergency call profile (e.g., an emergency call IMS profile) corresponding to the network to which the electronic device 101 is connected. According to an embodiment, when determining that the network to which the electronic device 101 is connected based on the change of the service area supports the VoLTE emergency call type and does not support CS communication, the processor 200 may identify the MCC and the MNC of the network to which the electronic device 101 is connected. For example, the MCC and the MNC of the network to which the electronic device 101 is connected may be acquired from a "PLMN-identity" information element included in a control message of the network to which the electronic device 101 is connected. According to an embodiment, the processor 200 may acquire an emergency call profile corresponding to the MCC and the MNC of the network to which the electronic device 101 is connected from the VoLTE emergency call type-related emergency call profile information stored in the memory 220.

According to an embodiment, the processor 200 may control the communication circuit 210 to provide the VoLTE emergency call type based on the emergency call profile corresponding to the MCC and the MNC of the network to which the electronic device 101 is connected.

According to an embodiment, when the emergency call profile corresponding to the MCC and the MNC of the network to which the electronic device 101 is connected does not exist in the VoLTE emergency call type-related emergency call profile information stored in the memory 220, the processor 220 may determine that the emergency call function of the electronic device 101 is restricted. For example, when determining that the emergency call function of the electronic device 101 is restricted, the processor 200 may output information (or an alert message) related to the restriction of the emergency call function to the outside. For example, the information related to the restriction of the emergency call function may be output to a display (not shown) of the electronic device 101.

According to various embodiments, the communication circuit 210 enables the electronic device 101 to transmit and/or receive a signal and/or data to and/or from at least one external electronic device (e.g., the electronic device 102 or 104 or the server 108 of FIG. 1). For example, the communication circuit 210 may include a radio frequency integrated circuit (RFIC) and/or a radio frequency front end (RFFE) for communication with at least one external electronic device.

According to various embodiments, the memory 220 may store various data used by at least one element (e.g., the processor 200 and/or the communication circuit 210) of the electronic device 200. According to an embodiment, the data may include the VoLTE emergency call type-related emergency call profile information (e.g., an emergency call profile database). According to an embodiment, the memory 220 may store various instructions (or a program 300) which can be executed by the processor 200.

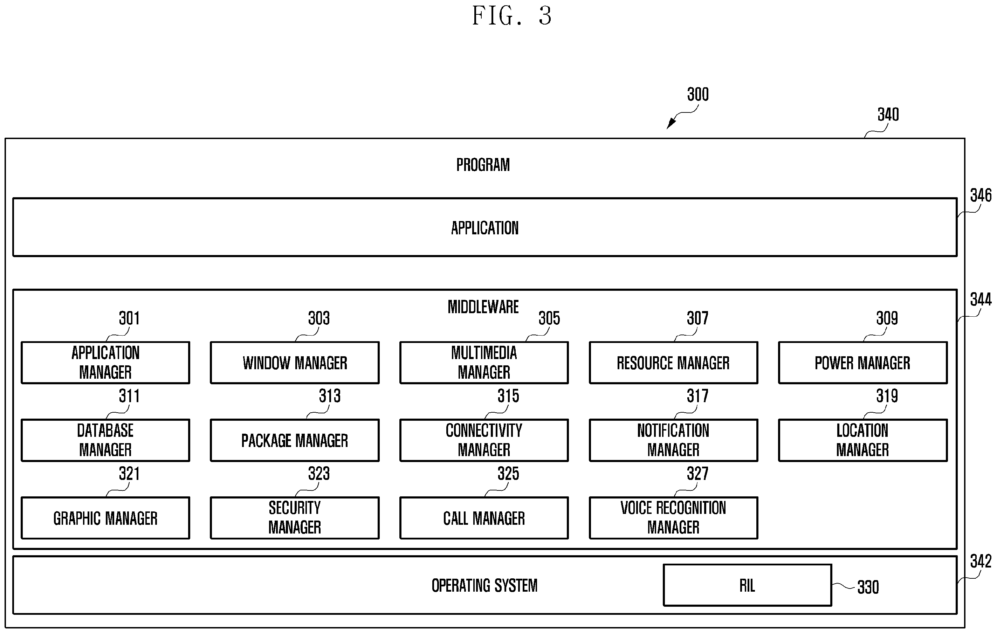

FIG. 3 is a block diagram 300 illustrating a program for providing an emergency call function according to various embodiments. For example, the program 340 of FIG. 3 may include the program 140 stored in the memory 130 of FIG. 1 or a program stored in the memory 220 of FIG. 2.

According to an embodiment, the program 340 may include an operating system (OS) 342 to control one or more resources of the electronic device 101, middleware 344, or an application 346 executable in the OS 342. The OS 342 may include, for example, Android^{™}, iOS^{™}, Windows^{™}, Symbian^{™}, Tizen^{™}, or Bada^{™}. At least part of the program 340, for example, may be pre-loaded on the electronic device 101 during manufacture, or may be downloaded from or updated by an external electronic device (e.g., the electronic device 102 or 104, or the server 108) during use by a user.

The OS 342 may control management (e.g., allocating or deallocation) of one or more system resources (e.g., process, memory, or power source) of the electronic device 101. The OS 342, additionally or alternatively, may include one or more driver programs to drive other hardware devices of the electronic device 101

According to an embodiment, an operating system 342 may include a radio interface layer (RIL) 330 for identifying whether the network to which the electronic device 101 is connected supports CS communication by receiving the same transferred from a modem, or controlling an emergency call type (e.g., VoLTE emergency call type or CS emergency call type) to be used in the electronic device 101.

The middleware 344 may provide various functions to the application 346 such that a function or information provided from one or more resources of the electronic device 101 may be used by the application 346. The middleware 344 may include, for example, an application manager 301, a window manager 303, a multimedia manager 305, a resource manager 307, a power manager 309, a database manager 311, a package manager 313, a connectivity manager 315, a notification manager 317, a location manager 319, a graphic manager 321, a security manager 323, a telephony manager 325, or a voice recognition manager 327.

The application manager 301, for example, may manage the life cycle of the application 346. The window manager 303, for example, may manage one or more graphical user interface (GUI) resources that are used on a screen. The multimedia manager 305, for example, may identify one or more formats to be used to play media files, and may encode or decode a corresponding one of the media files using a codec appropriate for a corresponding format selected from the one or more formats. The resource manager 307, for example, may manage the source code of the application 346 or a memory space of the memory 130.The power manager 309, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 309 may interwork with a basic input/output system (BIOS) (not shown) of the electronic device 101.

The database manager 311, for example, may generate, search, or change a database to be used by the application 346. For example, the database manager 311 may search and obtain the emergency call profile of the home network of the electronic device 101 or the network to which the electronic device 101 is connected (e.g., a roaming network) from the emergency call profile information associated with the VoLTE emergency call method. For example, the database manger 311 may include an IMS framework. For example, the emergency call profile of the home network of the electronic device 101 may include an emergency call profile corresponding to the MCC and the MNC included in the SIM of the electronic device 101. For example, the emergency call profile of the network to which the electronic device 101 is connected may include an emergency call profile corresponding to the MCC or the MNC acquired from a control message (e.g., SIB1) of the network to which the electronic device101 is connected.

The package manager 313, for example, may manage installation or update of an application that is distributed in the form of a package file. The connectivity manager 315, for example, may manage a wireless connection or a direct connection between the electronic device 101 and the external electronic device. The notification manager 317, for example, may provide a function to notify a user of an occurrence of a specified event (e.g., an incoming call, message, or alert). The location manager 319, for example, may manage locational information on the electronic device 101. The graphic manager 321, for example, may manage one or more graphic effects to be offered to a user or a user interface related to the one or more graphic effects.

The security manager 323, for example, may provide system security or user authentication. The telephony manager 325, for example, may manage a voice call function or a video call function provided by the electronic device 101. The voice recognition manager 327, for example, may transmit a user's voice data to the server 108, and receive, from the server 108, a command corresponding to a function to be executed on the electronic device 101 based at least in part on the voice data, or text data converted based at least in part on the voice data.

According to an embodiment, the middleware 344 may dynamically delete some existing components or add new components. According to an embodiment, at least part of the middleware 344 may be included as part of the OS 342 or may be implemented as another software separate from the OS 342.

According to an embodiment, the application 346 may include at least one application program associated with functionality provided by the electronic device 101. For example, the application 346 may include a calling application program associated with the emergency call function.

According to various embodiments, an electronic device (e.g., the electronic device 101 of FIG. 1 or FIG. 2) may include a memory (e.g., the memory 130 of FIG. 1 or the memory 220 of FIG. 2), a communication circuit (e.g., the wireless communication module 192 of FIG. 1 or the communication circuit 210 of FIG. 2), and at least one processor (e.g., the processor 120 of FIG. 1 or the processor 200 of FIG. 2) operatively connected to the memory and the communication circuit. According to an embodiment, the processor may detect, based on information related to a network to which the electronic device is connected, movement to a service area supporting an emergency call based on long-term evolution (LTE) communication. According to an embodiment, the processor may identify, based on the detection of the movement to the service area, whether an emergency call profile of the LTE communication, which corresponds to a home network of the electronic device, exists. According to an embodiment, when determining that the emergency call profile of the LTE communication, which corresponds to the home network of the electronic device, does not exist, the processor may identify, based on connection information to the network to which the electronic device is connected, whether the network supports circuit switching (CS) communication. According to an embodiment, the processor may acquire, based on the determination that the network does not support CS communication, the emergency call profile of the LTE communication, which corresponds to the network to which the electronic device is connected. According to an embodiment, the processor may provide, based on the emergency call profile of the LTE communication, which corresponds to the network, the emergency call based on the LTE communication.

According to various embodiments, the at least one processor may determine that the network does not support CS communication in case that a type of the connection of the electronic device to the network is evolved packet system (EPS) connection (EPS attach).

According to various embodiments, the type of the connection of the electronic device to the network may be acquired from an EPS connection result information element (EPS attach result IE) of a TAU acceptance-related message or a connection acceptance-related message received from the network to which the electronic device is connected.

According to various embodiments, the at least one processor may determine that the network does not support CS communication in case that the type of the connection of the electronic device to the network is combined connection (combined EPS/IMSI attach) and an additional update type is "SMS only".

According to various embodiments, the additional update type may be acquired from an additional update type IE of a TAU acceptance-related message or a connection acceptance-related message received from the network to which the electronic device is connected.

According to various embodiments, the at least one processor may determine that the network does not support CS communication in case that the service area of the network of the electronic device is included in a CS communication restriction service area list.

According to various embodiments, the at least one processor may acquire an emergency call profile of the LTE communication, which corresponds to a mobile country code (MCC) and a mobile network code (MNC) of the network to which the electronic device is connected.

According to various embodiments, the at least one processor may to acquire an emergency call profile of the LTE communication, which corresponds to the network to which the electronic device is connected, in an emergency call profile database of the LTE communication, stored in the memory.

According to various embodiments, the at least one processor may provide, based on a profile related to the emergency call of the LTE communication, the emergency call based on the LTE communication in case that an emergency call profile of the LTE communication, which corresponds to the home network of the electronic device, exists.

According to various embodiments, the at least one processor may provide an emergency call based on the CS communication in case of the determination that the network supports the CS communication.

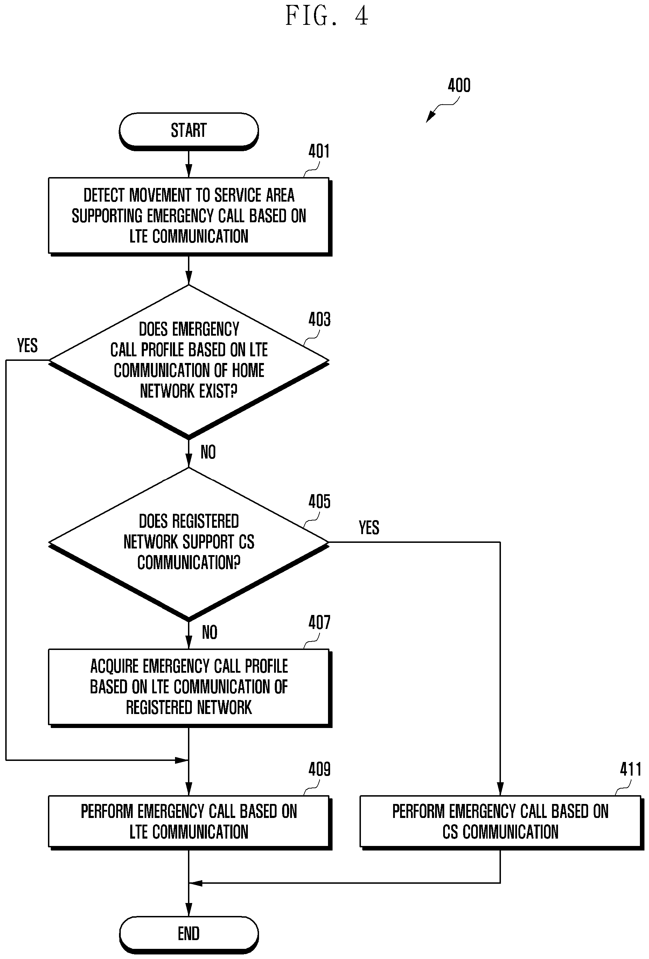

FIG. 4 is a flow chart 400 for providing an emergency call function in an electronic device according to various embodiments. Hereinafter, respective operations in an embodiment may be subsequently performed, but are not necessarily performed subsequently. For example, the sequence of the respective operations may be changed, two or more operations may be performed in parallel. For example, the electronic device of FIG. 4 may be the electronic device 101 of FIG. 1 or FIG. 2.

According to various embodiments referring to FIG. 4, an electronic device (e.g., the processor 120 of FIG. 1 or the processor 200 of FIG. 2) may detect, in operation 401, movement of the electronic device 101 to a service area supporting an emergency call (e.g., a VoLTE emergency call type) based on LTE communication. According to an embodiment, the processor 200 may identify, based on an MCC and/or an MNC of a network to which the electronic device 101 is connected, whether a service area (e.g., country) in which the electronic device 101 is located is changed. For example, when the MCC of the network to which the electronic device 101 is connected is matched to an MCC included in a PLMN list of an EHPLMN or an MCC of an IMSI and the MNC of the network to which the electronic device 101 is connected is matched to an MNC included in the PLMN list of the EHPLMN or an MNC of the IMSI, the processor 200 may determine that the electronic device 101 is connected to a network of a home PLMN (HPLMN). That is, the processor 200 may determine that the service area of the electronic device 101 is not changed. For example, when the MCC of the network to which the electronic device 101 is connected is not matched to the MCC included in the PLMN list of the EHPLMN or the MCC of the IMSI or the MNC of the network to which the electronic device 101 is connected is not matched to the MNC included in the PLMN list of the EHPLMN or the MNC of the IMSI, the processor 200 may determine that the service area (e.g., country) of the electronic device 101 is changed. For example, the service area (e.g., country) may include at least one cellular network operated by the same communication operator. For example, the change of the service area (e.g., country) may be referred to as "roaming".

According to an embodiment, when determining that the service area (e.g., country) of the electronic device 101 is changed, the processor 200 may identify whether the network to which the electronic device 101 is connected supports the VoLTE emergency call type. For example, the processor 200 may identify, based on a value of an "ims-EmergencySupport-r9" field of system information block type 1 (SIB1) received from the network to which the electronic device 101 is connected, whether the network to which the electronic device 101 is connected support the VoLTE emergency call type. For example, when the value of the "ims-EmergencySupport-r9" field of SIB1 is configured to be "true", the processor 200 may determine that the network to which the electronic device 101 is connected supports the VoLTE emergency call type. For example, when the value of the "ims-EmergencySupport-r9" field of SIB1 is configured to be "false" or the "ims-EmergencySupport-r9" field is not configured, the processor 200 may determine that the network to which the electronic device 101 is connected does not support the VoLTE emergency call type. For example, SIB1 may be configured as in Table 1 (e.g., TS 36.331 standard).

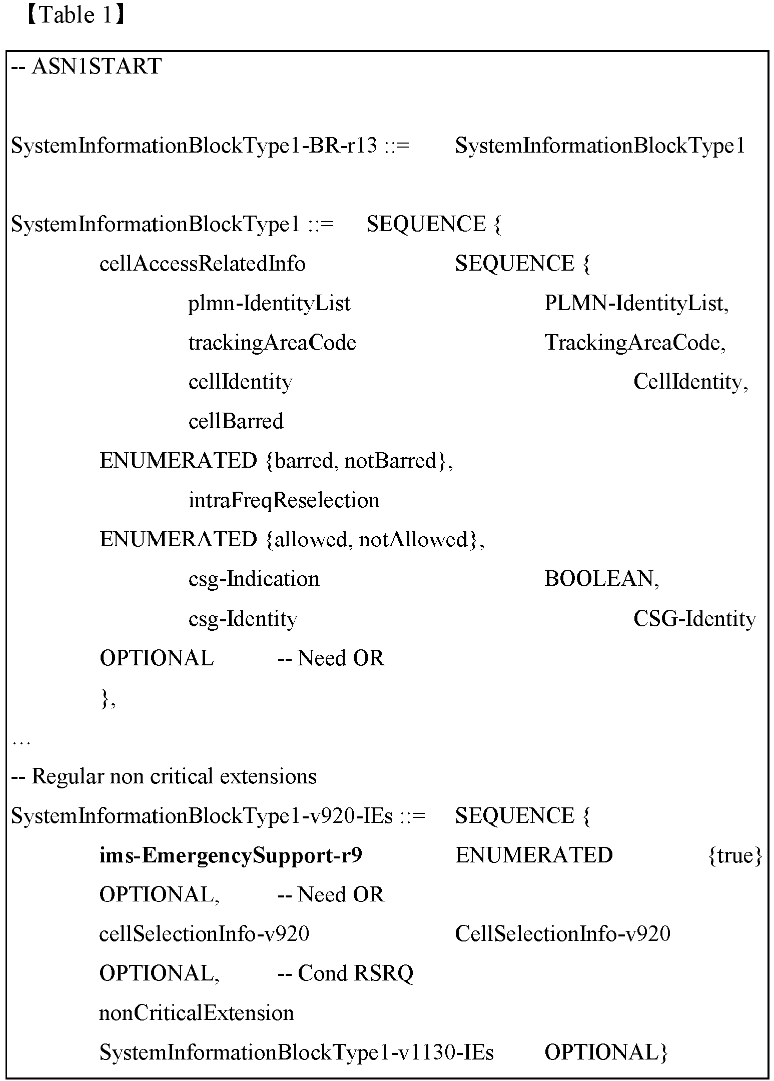

For example, the processor 200 may identify, based on a value of an "EMC BS" field of "EPS network feature support" of a TAU-related message (e.g., tracking area update accept) or a connection acceptance-related message (e.g., attach accept) received from the network to which the electronic device 101 is connected, whether the network to which the electronic device 101 is connected support the VoLTE emergency call type. For example, the "EMC BS" of "EPS network feature support" of the TAU-related message (e.g., tracking area update accept) or the connection acceptance-related message (e.g., attached accept) may be defined as in Table 2 (e.g., TS24.301 standard).

**[Table 2]**

| Emergency bearer service indicator (EMC BS)(octet 3, bit 2) | |
|---|---|
| Bit | |
| 2 | |
| 0 | emergency bearer services in S1 mode not supported |
| 1 | emergency bearer services in S1 mode supported |

For example, when the value of the "EMC BS" field is configured to be "1", the processor 200 may determine that the network to which the electronic device 101 is connected supports the VoLTE emergency call type. For example, when the value of the "EMC BS" field is configured to be "0", the processor 200 may determine that the network to which the electronic device 101 is connected does not support the VoLTE emergency call type.

According to various embodiments, the electronic device (e.g., the processor 120 or the processor 200 of FIG. 2) may identify, in operation 403, a VoLTE emergency call-type emergency call profile corresponding to a home network (e.g., HPLMN) of the electronic device 101 exists. According to an embodiment, when determining that the electronic device 101 is moved to the service area supporting the VoLTE emergency call type (e.g., operation 401), the processor 200 may identify whether an emergency call profile corresponding to the MCC and the MNC of an SIM (not shown) of the electronic device 101 exists in VoLTE emergency call type-related emergency call profile information stored in the memory 220. For example, when the emergency call profile corresponding to the MCC and the MNC of the SIM of the electronic device 101 exists in the VoLTE emergency call type-related emergency call profile information stored in the memory 220, the processor 200 may determine that the VoLTE emergency call-type emergency call profile corresponding to the home network of the electronic device 101 exists. For example, when the emergency call profile corresponding to the MCC and the MNC of the SIM of the electronic device 101 does not exist in the VoLTE emergency call type-related emergency call profile information stored in the memory 220, the processor 200 may determine that the VoLTE emergency call-type emergency call profile corresponding to the home network of the electronic device 101 does not exist. For example, the VoLTE emergency call type-related emergency call profile may include a database of emergency call profiles negotiated to support an emergency call through an LTE network. For example, the VoLTE emergency call-type emergency call profile may include an emergency call Internet protocol (IP) multimedia subsystem (IMS) profile.

According to various embodiments, the electronic device (e.g., the processor 120 or 200) may identify, in operation 405, whether the network to which the electronic device is connected supports CS communication when determining that the VoLTE emergency call-type emergency call profile corresponding to the home network of the electronic device 101 does not exist (e.g., if "no" in operation 403). According to an embodiment, the processor 200 may determine that the network to which the electronic device 101 is connected does not support CS communication when an evolved packet system (EPS) connection type (e.g., EPS attach type) of the electronic device 101 is "EPS attach" (or "ESP only" (e.g., "001")). For example, as in Table 3 (e.g., TS 24.301 standard), the EPS connection type may be identified based on a value of a field of an "EPS attach result" information element (IE) of a TAU acceptance-related or a connection acceptance-related message received from the network to which the electronic device 101 is connected.

**[Table 3]**

| EPS attach result value (octet 1) | |
|---|---|
| Bits | |
| 3 2 1 | |
| 0 0 1 | EPS only |
| 0 1 0 | combined EPS/IMSI attach |
| All other values are reserved. | |
| Bit 4 of octet 1 is spare and shall be coded as zero | |

According to an embodiment, when an EPS connection type (e.g., EPS attach type) of the electronic device 101 is "combined EPS/IMSI attach" (e.g., "010") and an additional update type (e.g., additional update type) is "SMS only" (e.g., "1"), the processor 200 may determine that the network to which the electronic device 101 is connected does not support CS communication. For example, the additional update type may be identified based on a value of a field of an "additional update type" information element (IE) of a TAU acceptance-related or a connection acceptance-related message received from the network to which the electronic device 101 is connected , as in Table 4 (e.g., TS 24.301 standard).

**[Table 4]**

| Additional update type value (AUTV) (octet 1) | |
|---|---|
| | |
| Bit | |
| 0 | no additional information. If received it shall be interpreted as request for combined attach or combined tracking area updating. |
| 1 | SMS only |

According to an embodiment, when the service area (e.g., country) in which the electronic device 101 is located is included in a list of service areas (e.g., a list of countries) not supporting CS communication, the processor 200 may determine that the network to which the electronic device 101 is connected does not support CS communication. When the service area (e.g., country) in which the electronic device 101 is located is not included the list of service areas (e.g., the list of countries) not supporting CS communication, the processor 200 may determine that the network to which the electronic device 101 is connected supports CS communication.

According to various embodiments, the electronic device (e.g., the processor 120 or 200) may acquire, in operation 407, a VoLTE emergency call-type emergency call profile corresponding to the network to which the electronic device 101 is connected when determining that the network to which the electronic device is connected does not support CS communication (e.g., if "no" in operation 405). According to an embodiment, the processor 200 may acquire an emergency call profile corresponding to the MCC and the MNC of the network to which the electronic device 101 is connected from the VoLTE emergency call type-related emergency call profile information stored in the memory 220. For example, the operation of acquiring the emergency call profile may include a series of operation of reading or loading an emergency call profile corresponding to the MCC and the MNC of the network to which the electronic device 101 is connected from the VoLTE emergency call type-related emergency call profile information (e.g., database) stored in the memory 220. For example, the MCC and the MNC of the network to which the electronic device 101 is connected may be acquired from a "PLMN-identity" information element included in a control message (e.g., SIB1) of the network to which the electronic device 101 is connected, as defined in Table 5 (e.g., TS36.331 standard).

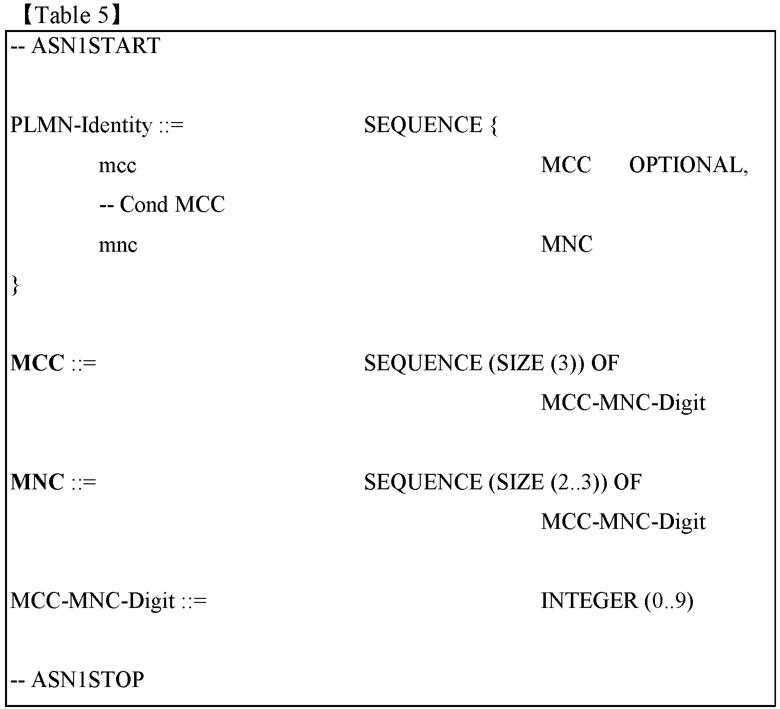

According to various embodiments, when determining that the VoLTE emergency call-type emergency call profile corresponding to the home network of the electronic device 101 exists (e.g., if "yes" in operation 403), or when acquiring the VoLTE emergency call-type emergency call profile corresponding to the network to which the electronic device 101 is connected (e.g., operation 407), the electronic device (e.g., the processor 120 or 200) may support, in operation 409, an emergency call through the VoLTE emergency call type, based on the VoLTE emergency call-type emergency call profile.

According to various embodiments, when determining that the network to which the electronic device is connected support CS communication (e.g., if "yes" in operation 405), the electronic device (e.g., the processor 120 or 200) may support an emergency call through a CS emergency call type in operation 411. For example, the CS emergency call type may include a type of supporting an emergency call through a circuit switch (CS) network. For example, the CS network may include a 2G or 3G communication-type network.

According to various embodiments, the electronic device (e.g., the processor 120 or 200) may provide an emergency call function (e.g., a VoLTE emergency call function) of the electronic device 101 by acquiring the VoLTE emergency call-type emergency call profile corresponding to network information (e.g., MCC and MNC) in the network not supporting CS communication.

According to various embodiments, when the electronic device (e.g., the processor 120 or 200) fails to acquire the VoLTE emergency call-type emergency call profile corresponding to the network to which the electronic device 101 is connected, the electronic device may restrict the emergency call function of the electronic device 101. According to an embodiment, when the emergency call profile corresponding to the MCC and the MNC of the network to which the electronic device 101 is connected does not exist in the VoLTE emergency call type-related emergency call profile information stored in the memory 220, the processor 200 may determine that the emergency call function of the electronic device 101 is restricted. When determining that the emergency call function of the electronic device 101 is restricted, the processor 200 may output information (or an alert message) related to the restriction of the emergency call function to the outside.

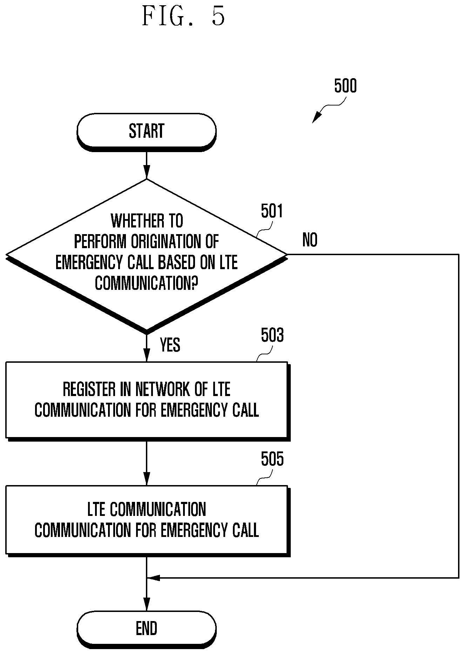

FIG. 5 is a flow chart 500 illustrating origination of an emergency call in an electronic device according to various embodiments. According to an embodiment, at least some of FIG. 5 may include detailed operations of operation 409 of FIG. 4. Hereinafter, respective operations in an embodiment may be subsequently performed, but are not necessarily performed subsequently. For example, the sequence of the respective operations may be changed, two or more operations may be performed in parallel. For example, the electronic device of FIG. 5 may be the electronic device 101 of FIG. 1 or FIG. 2.

According to various embodiments referring to FIG. 5, an electronic device (e.g., the processor 120 of FIG. 1 or the processor 200 of FIG. 2) may determine whether to perform origination of an emergency call in operation 501. According to an embodiment, the processor 200 may determine that the VoLTE emergency call type is supported when the emergency call profile of the VoLTE emergency call type corresponding to the home network of the electronic device 101 exists (e.g., if "yes" in operation 403) or when acquiring the VoLTE emergency call-type emergency call profile corresponding to the network to which the electronic device 101 is connected (e.g., operation 407). When an emergency call origination event is detected, the processor 200 may determine to perform the origination of the emergency call, based on the VoLTE emergency call type. When the emergency call origination event is not detected, the processor 200 may determine not to the perform the origination of the emergency call. For example, the emergency call origination event may occur based on at least one of execution of a function or an application program related to the origination of the emergency call, a user input related to origination of the emergency call, and reception of a signal related to the origination of the emergency call.

According to various embodiments, when determining not to perform origination of the emergency call (e.g., if "no" in operation 501), the electronic device (e.g., the processor 120 or 200) may end the embodiment for the origination of the emergency call.

According to various embodiments, when determining to perform origination of the emergency call (e.g., if "yes" in operation 501), the electronic device (e.g., the processor 120 or 200) may register in (or connect to), based on the VoLTE emergency call-type emergency call profile, an LTE communication network in operation 503. For example, the VoLTE emergency call-type emergency call profile may include an emergency call profile corresponding to the home network of the electronic device 101 or an emergency call profile corresponding to the network to which the electronic device 101 is connected. For example, the operation of registering in (or connecting to), based on the VoLTE emergency call-type emergency call profile, the LTE communication network may include an emergency-type packet data network (PDN) connection procedure or an IMS registration procedure for an emergency session.

According to various embodiments, the electronic device (e.g., the processor 120 or 200) may perform (or perform origination of) the emergency call through the registered (or connected) LTE communication network, based on the VoLTE emergency call-type emergency call profile in operation 505.

According to various embodiments, when the electronic device (e.g., the processor 120 or 200) fails to register in (or connect to) the LTE communication network, based on the VoLTE emergency call-type emergency call profile, the emergency call function of the electronic device 101 may be restricted. When determining that the emergency call function of the electronic device 101 is restricted, the processor 200 may output information (or an alert message) related to the restriction of the emergency call function to the outside. For example, the information related to the restriction of the emergency call function may be output to a display (not shown) of the electronic device 101.

According to various embodiments, a method for operating an electronic device (e.g., the electronic device 101 of FIG. 1 or FIG. 2) may include detecting, based on information related to a network to which the electronic device is connected, movement of the electronic device to a service area supporting an emergency call based on long-term evolution (LTE) communication. According to an embodiment, the electronic device may identify, based on the detection of the movement to the service area, whether an emergency call profile of the LTE communication, which corresponds to a home network of the electronic device, exists. According to an embodiment, when determining that the emergency call profile of the LTE communication, which corresponds to the home network of the electronic device, does not exist, the electronic device may identify, based on connection information to the network to which the electronic device is connected, whether the network supports circuit switching (CS) communication. According to an embodiment, the electronic device may acquire, based on the determination that the network does not support CS communication, the emergency call profile of the LTE communication, which corresponds to the network to which the electronic device is connected. According to an embodiment, the electronic device may provide, based on the emergency call profile of the LTE communication, which corresponds to the network, the emergency call based on the LTE communication.

According to various embodiments, the method may include determining that the network does not support CS communication in case that a type of the connection of the electronic device to the network is evolved packet system (EPS) connection (EPS attach).

According to various embodiments, the type of the connection of the electronic device to the network may be acquired from an EPS connection result information element (EPS attach result IE) of a TAU acceptance-related message or a connection acceptance-related message received from the network to which the electronic device is connected.

According to various embodiments, the method may include determining that the network does not support CS communication in case that the type of the connection of the electronic device to the network is combined connection (combined EPS/IMSI attach) and an additional update type is "SMS only".

According to various embodiments, the additional update type may be acquired from an additional update type IE of a TAU acceptance-related message or a connection acceptance-related message received from the network to which the electronic device is connected.

According to various embodiments, the method may include determining that the network does not support CS communication in case that the service area of the network of the electronic device is included in a CS communication restriction service area list.

According to various embodiments, the acquiring of the emergency call profile of the LTE communication may include acquiring an emergency call profile of the LTE communication, which corresponds to a mobile country code (MCC) and a mobile network code (MNC) of the network to which the electronic device is connected.

According to various embodiments, the acquiring of the emergency call profile of the LTE communication may include acquiring an emergency call profile of the LTE communication, which corresponds to the network to which the electronic device is connected, in an emergency call profile database of the LTE communication, stored in the electronic device.

According to various embodiments, the method may include providing, based on a profile related to the emergency call of the LTE communication, the emergency call based on the LTE communication in case that an emergency call profile of the LTE communication, which corresponds to the home network of the electronic device, exists.

According to various embodiments, the method may include providing an emergency call based on the CS communication in case of the determination that the network supports the CS communication.

The embodiments of the disclosure in the specification and drawings are only presented as specific examples to easily explain the technical content according to the embodiments of the disclosure and help understanding of the embodiments of the disclosure, but not intended to limit the scope of the embodiments of the disclosure. Therefore, the scope of various embodiments of the disclosure should be construed as including all changes or modified forms derived based on the technical spirit of various embodiments of the disclosure, in addition to the embodiments disclosed herein are included in the scope of various embodiments of the disclosure.

## Claims

1. An electronic device comprising:
a memory;
a communication circuit; and
at least one processor operatively connected to the memory and the communication circuit,
wherein the at least one processor is configured to:
detect, based on information related to a network to which the electronic device is connected, movement to a service area supporting an emergency call based on long-term evolution (LTE) communication;
identify, based on the detection of the movement to the service area, whether an emergency call profile of the LTE communication, which corresponds to a home network of the electronic device, exists;
in response to determination that the emergency call profile of the LTE communication, which corresponds to the home network of the electronic device, does not exist, identify, based on connection information to the network to which the electronic device is connected, whether the network supports circuit switching (CS) communication;
obtain, based on the determination that the network does not support CS communication, the emergency call profile of the LTE communication, which corresponds to the network to which the electronic device is connected; and
provide, based on the emergency call profile of the LTE communication, which corresponds to the network, the emergency call based on the LTE communication.

2. The electronic device of claim 1, wherein the at least one processor is configured to determine that the network does not support CS communication in case that a type of the connection of the electronic device to the network is evolved packet system (EPS) connection (EPS attach) or in case that the type of the connection of the electronic device to the network is combined connection (combined EPS/IMSI attach) and an additional update type is "SMS only".

3. The electronic device of claim 2, wherein the type of the connection of the electronic device to the network is obtained from an EPS connection result information element (EPS attach result IE) of a TAU acceptance-related message or a connection acceptance-related message received from the network to which the electronic device is connected.

4. The electronic device of claim 2, wherein the additional update type is obtained from an additional update type IE of a TAU acceptance-related message or a connection acceptance-related message received from the network to which the electronic device is connected.

5. The electronic device of claim 1, wherein the at least one processor is configured to determine that the network does not support CS communication in case that the service area of the network of the electronic device is included in a CS communication restriction service area list.

6. The electronic device of claim 1, wherein the at least one processor is configured to obtain an emergency call profile of the LTE communication, which corresponds to a mobile country code (MCC) and a mobile network code (MNC) of the network to which the electronic device is connected.

7. The electronic device of claim 1, wherein the memory is configured to store an emergency call profile database of the LTE communication, and
wherein the at least one processor is configured to obtain an emergency call profile of the LTE communication, which corresponds to the network to which the electronic device is connected, in the database.

8. The electronic device of claim 1, wherein the at least one processor is configured to provide, based on a profile related to the emergency call of the LTE communication, the emergency call based on the LTE communication in case that an emergency call profile of the LTE communication, which corresponds to the home network of the electronic device, exists.

9. The electronic device of claim 1, wherein the at least one processor is configured to provide an emergency call based on the CS communication in case of the determination that the network supports the CS communication.

10. A method for operating an electronic device, the method comprising:
detecting, based on information related to a network to which the electronic device is connected, movement of the electronic device to a service area supporting an emergency call based on long-term evolution (LTE) communication;
identifying, based on the detection of the movement to the service area, whether an emergency call profile of the LTE communication, which corresponds to a home network of the electronic device, exists;
in response to determination that the emergency call profile of the LTE communication, which corresponds to the home network of the electronic device, does not exist, identifying, based on connection information to the network to which the electronic device is connected, whether the network supports circuit switching (CS) communication;
obtaining, based on the determination that the network does not support CS communication, the emergency call profile of the LTE communication, which corresponds to the network to which the electronic device is connected; and
providing, based on the emergency call profile of the LTE communication, which corresponds to the network, the emergency call based on the LTE communication.

11. The method of claim 10, further comprising determining that the network does not support CS communication in case that a type of the connection of the electronic device to the network is evolved packet system (EPS) connection (EPS attach), in case that the type of the connection of the electronic device to the network is combined connection (combined EPS/IMSI attach) and an additional update type is "SMS only", or in case that the service area of the network of the electronic device is included in a CS communication restriction service area list.

12. The method of claim 10, wherein the obtaining of the emergency call profile of the LTE communication comprises obtaining an emergency call profile of the LTE communication, which corresponds to a mobile country code (MCC) and a mobile network code (MNC) of the network to which the electronic device is connected.

13. The method of claim 10, wherein the obtaining of the emergency call profile of the LTE communication comprises obtaining an emergency call profile of the LTE communication, which corresponds to the network to which the electronic device is connected, in an emergency call profile database of the LTE communication, stored in the electronic device.

14. The method of claim 10, further comprising providing, based on a profile related to the emergency call of the LTE communication, the emergency call based on the LTE communication in case that an emergency call profile of the LTE communication, which corresponds to the home network of the electronic device, exists.

15. The method of claim 10, further comprising providing an emergency call based on the CS communication in case of the determination that the network supports the CS communication.
